# EUROPEAN PATENT SPECIFICATION

(11) **EP 1 300 340 B1**
(45) Date of publication and mention of the grant of the patent: **29.08.2007**
(21) Application number: 01830625.8
(22) Date of filing: 04.10.2001
(51) Int. Cl.: B65B 51/30

(54) **Device for heat sealing a tube of sheet packaging material filled with a pourable food product**
Gerät zum Heisssiegeln eines mit einem fliessfähigen Nahrungsmittel gefüllten Verpackungsschlauches
Dispositif pour thermosceller un emballage tubulaire, rempli d' un produit alimentaire fluide

(43) Date of publication of application: 09.04.2003
(73) Proprietor: Tetra Laval Holdings & Finance SA, 1009 Pully (CH)
(72) Inventor: Capasso, Salvatore, 41100 Modena (IT); Fangarezzi, Gianni, 41012 Carpi (IT); Bengtsson, Robert, 236 36 Hollviken (SE); Karlsson, Magne, 224 56 Lund (SE)
(74) Representative: Franzolin, Luigi

(56) References cited:
- US-A- 4 961 302
- US-A- 5 231 817
- US-A- 5 247 779
- US-A- 5 787 690
- US-B1- 6 216 420

## Description

The present invention relates to a device for heat sealing a tube of sheet packaging material filled with a pourable food product, according to the preamble of claim 1 (US-A-5 231 817).

More specifically, the present invention relates to a heat-seal device which may be incorporated in a packaging machine for continuously producing sealed packages of pourable food products from said tube of packaging material.

Many pourable food products, such as fruit juice, pasteurized or UHT (ultra-high-temperature processed) milk, wine, tomato sauce, etc., are sold in packages made of sterilized packaging material.

A typical example of such a package is the parallelepiped-shaped package for liquid or pourable food products known as Tetra Brik Aseptic (registered trademark), which is formed by folding and sealing a web of laminated packaging material. The packaging material has a multilayer structure comprising a layer of fibrous material, e.g. paper, covered on both sides with heat-seal plastic material, e.g. polyethylene.

In the case of aseptic packages for long-storage products such as UHT milk, the packaging material comprises a layer of oxygen-barrier material, e.g. a sheet of aluminium, which is superimposed on a layer of heat-seal plastic material and is in turn covered with another layer of heat-seal plastic material eventually forming the inner face of the package contacting the food product.

As is known, such packages are made on fully automatic packaging machines, on which a continuous tube is formed from the web-fed packaging material; the web of packaging material is sterilized on the packaging machine itself, e.g. by applying a chemical sterilizing agent, such as a hydrogen peroxide solution, which, after sterilization, is removed, e.g. vaporized by heating, from the surfaces of the packaging material; and the web of packaging material so sterilized is maintained in a closed sterile environment, and is folded and sealed longitudinally to form a tube.

The tube is fed continuously in a first vertical direction, is filled with the sterilized or sterile-processed food product, and is gripped and heat sealed at equally spaced cross sections by means of a heat-seal device.

More specifically, the heat-seal device comprises two or more pairs of jaws, which act cyclically and successively on the tube and heat seal the packaging material of the tube to form a continuous strip of pillow packs connected to one another by respective transverse sealing bands, i.e. extending in a second direction perpendicular to said first direction.

The pillow packs are separated by cutting the respective sealing bands, and are then fed to a final folding station where they are folded mechanically into the finished parallelepiped shape.

The tube portion gripped between each pair of jaws is heat sealed by heating means carried by one of the jaws and for locally melting the two layers of heat-seal plastic material gripped between the jaws.

More specifically, packaging material in which the layer of barrier material is defined by a sheet of electrically conductive material, e.g. aluminium, is normally heat sealed by a so-called induction heat-seal process, in which, when the tube is gripped by the pair of jaws, electric current is induced in the sheet of aluminium to heat it locally and so locally melt the heat-seal plastic material.

More specifically, in induction heat sealing, the heating means substantially comprise an inductor, which is carried by one of the two jaws, known as the sealing jaw, is supplied by a high-frequency current generator, and is substantially defined by one or more inducting bars made of electrically conductive material, extending parallel to the second direction, and which interact with and induce an electric current in the tube material to heat it to the necessary heat-seal temperature.

In the commonest known embodiment, the inductor defines, frontally, two straight, elongated active surfaces extending parallel to the second direction and on opposite sides of an intermediate plane perpendicular to the first direction. More specifically, the active surfaces are located in respective front contact surfaces of the sealing jaw, extending on opposite sides of and parallel to said intermediate plane and separated by a central recess, and have continuous or segmented longitudinal projections projecting towards the packaging material.

The other jaw, known as the counterjaw, has two pressure pads made of elastomeric material, extending on opposite sides of and parallel to the intermediate plane, and having respective flat front contact surfaces, which cooperate with the respective front contact surfaces of the sealing jaw, and therefore with the respective active surfaces of the inductor, to heat seal the tube along respective sealing lines defining the transverse sealing band.

Once the heat-seal operation is completed, a cutting member, carried, for example, by one of the two jaws, normally the counterjaw, is activated and which interacts with the tube of packaging material to cut the tube along the center line of the transverse sealing band between the sealing lines, and so cut a pillow pack off the bottom end of the tube of packaging material. The bottom end being sealed transversely, the jaws, on reaching the bottom dead-center position, can be opened to avoid interfering with the top portion of the tube.

Though providing for good-quality seals, known heat-seal devices of the above type still leave room for improvement.

In particular, when packaging pourable food products containing small solid particles (e.g. fibers or seeds, as in tomato products), some of the particles may become lodged between the contacting portions of the two sheets of packaging material for sealing, thus locally impairing heat sealing of the packaging material. In which case, depending on the location of the particles trapped in the sealing band, channels may be formed through the sealed portion, thus endangering the sterility of the package.

It is an object of the present invention to provide a device for heat sealing a tube of sheet packaging material filled with a pourable food product, designed to provide a straightforward, low-cost solution to the above drawback.

According to the present invention, there · is provided a device for heat sealing a tube of sheet packaging material filled with a pourable food product and fed along a feed path, said device comprising at least one first and at least one second jaw having sealing means and pressure means respectively, and movable towards each other in a direction crosswise to said feed path to grip said tube at a relative cross section and to seal the tube along said cross section; said first jaw defining at least one first contact surface cooperating with said tube of packaging material and having at least one projection forming part of the sealing means; and said pressure means defining at least one second contact surface cooperating with said tube of packaging material on the opposite side to said first contact surface;
said second contact surface being convex, at least at said projection of said first contact surface; said second contact surface defining a maximum projection point (M), towards said first jaw; characterized in that said maximum-projection point (M) is offset with respect to said projection in the direction of the feed path (A).

A preferred, non-limiting embodiment of the present invention will be described by way of example with reference to the accompanying drawings, in which:
Figure 1 shows a schematic side view of a heat-seal device in accordance with the present invention;
Figure 2 shows a larger-scale cross section of a detail of the Figure 1 device.

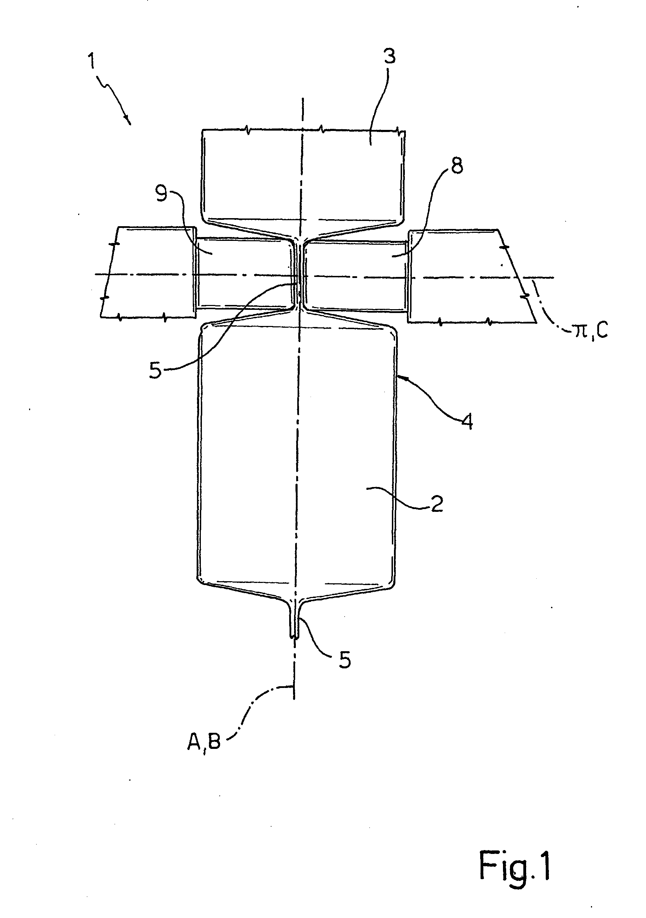

Number 1 in Figure 1 indicates as a whole a heat-seal device in accordance with the present invention.

Device 1 may be incorporated in a packaging machine (not shown) for continuously producing aseptic sealed packages 2 of a pourable food product - in the example shown, containing small solid particles (seeds or fibers), such as fruit juice or tomato products - from a tube 3 of packaging material.

The packaging material has a multilayer structure (not shown) and comprises a layer of fibrous material, normally paper, covered on both sides with respective layers of heat-seal plastic material, e.g. polyethylene; and the side of the packaging material eventually contacting the food product in package 2 also has a layer of electrically conductive oxygen-barrier material, e.g. aluminium, in turn covered with one or more layers of heat-seal plastic material.

Tube 3 is formed in known manner upstream from device 1 by longitudinally folding and sealing a web of heat-seal sheet material, is filled with the sterilized or sterile-processed food product for packaging, and is fed by known devices (not shown) along a vertical path A coincident with its own longitudinal axis B.

Device 1 interacts with tube 3 to heat seal it at equally spaced cross sections and form a vertical strip 4 of packages 2 connected to one another by respective transverse sealing bands 5. More specifically, device 1 heat seals each sealing band 5 along two spaced sealing lines (not shown) adjacent to the respective packages 2 connected by band 5. Strip 4 is then cut along each sealing band 5 - more specifically, between the relative sealing lines - to separate packages 2.

Device 1 comprises two or more pairs of jaws 8, 9 (only one pair shown in the drawings and described in detail below) which act cyclically and successively on tube 3.

Jaws 8, 9 are positioned diametrically opposite with respect to axis B, and are movable towards each other, in a direction C perpendicular to feed path A and therefore to axis B, to grip and heat seal tube 3 at a relative cross section and so define a relative sealing band 5 of strip 4 of packages 2.

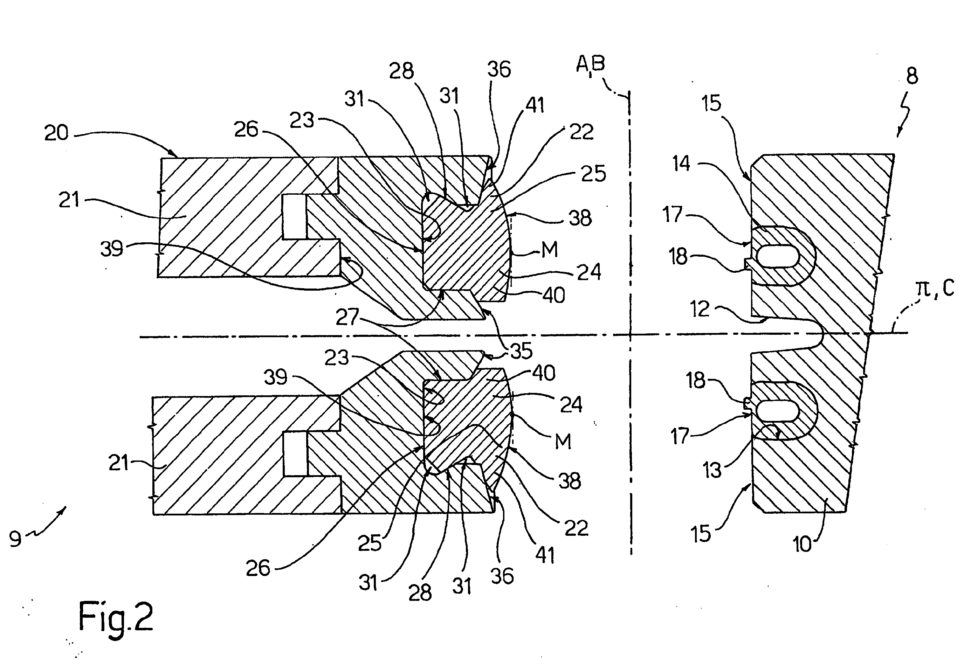

With reference to Figure 2, jaw 8 comprises a front portion 10 extending crosswise to feed path A and to direction C, and having a central recess 12, and a substantially U-shaped front groove 13 engaged by a correspondingly shaped induction heating element 14. More specifically, front portion 10 is defined, towards jaw 9, by two flat longitudinal contact surfaces 15, which cooperate with tube 3 and are separated by recess 12.

Heating element 14 has a substantially annular cross section, has an inner cavity for the passage of cooling fluid, and has two straight, elongated active surfaces 17 which interact with tube 3, extend on opposite sides of and parallel to an intermediate plane π perpendicular to feed path A, and define respective intermediate longitudinal portions of contact surfaces 15.

Heating element 14 also has two continuous or segmented, straight, longitudinal projections 18, which project from respective active surfaces 17 towards jaw 9, extend substantially the whole length of active surfaces 17, and provide, when heat sealing, for increasing the gripping pressure on tube 3.

Jaw 9 comprises a supporting body 20 terminating, towards jaw 8, with two transverse members 21, which extend perpendicularly to axis B and direction C, are positioned symmetrically on opposite sides of intermediate plane π, and face respective contact surfaces 15 of jaw 8.

Transverse members 21 are fitted on the front, towards jaw 8, with respective pressure pads 22 normally made of elastomeric material and which cooperate with respective contact surfaces 15 of jaw 8, and therefore with active surfaces 17 of heating element 14, to grip and heat seal tube 3. More specifically, each pressure pad 22 is housed in a front retaining seat 23 - substantially U-shaped when viewed from the side - of respective transverse member 21.

Each pressure pad 22 comprises a first longitudinal portion 24 supported substantially rigidly inside respective seat 23 and facing a respective projection 18 of heating element 14; and a second longitudinal portion 25 supported flexibly inside seat 23 and adjacent to longitudinal portion 24, on the opposite side to intermediate plane π.

Each seat 23 comprises a longitudinal bottom surface 26; a flat first longitudinal lateral surface 27; and a second longitudinal lateral surface 28 facing lateral surface 27 and defining an undercut with bottom surface 26.

Longitudinal portion 24 of each pressure pad 22 rests on and is shaped to match respective seat 23, whereas longitudinal portion 25 forms with seat 23 two longitudinal, substantially triangular-section gaps 31.

For each seat 23, jaw 9 comprises two longitudinal front supporting surfaces 35, 36, which face jaw 8, are located on opposite sides of seat 23 with reference to feed path A, and slope with respect to intermediate plane π so as to converge inwards of relative pressure pad 22.

Surfaces 35 are adjacent to each other on opposite sides of intermediate plane π; and intermediate transverse portions of surfaces 36 define respective recesses, grooves or projections which interact with the longitudinal seal along the intermediate portion of tube 3 of packaging material where the longitudinal edges of tube 3 overlap.

Each pressure pad 22 is defined by a front contact surface 38 which interacts with tube 3 and faces relative contact surface 15 of jaw 8; and by a flat rear surface 39 resting on bottom surface 26 of respective seat 23.

An important aspect of the present invention is that contact surface 38 of each pressure pad 22 is convex to ensure, at relative projection 18, a sufficiently high initial gripping pressure on tube 3 to expel any solid particles, such as fibers or seeds, in the food product from the sealing area.

More specifically, contact surface 38 of each pressure pad 22 is arc-shaped, and defines a maximum-projection point M, towards jaw 8, offset slightly with respect to relative projection 18 in the direction of feed path A. More specifically, when tube 3 is gripped by jaws 8, 9, point M of each contact surface 38 is located adjacent to relative projection 18, on the opposite side to recess 12.

Each pressure pad 22 defines two lateral lips 40, 41 resting on respective supporting surfaces 35, 36; and lip 41 tapers towards its lateral end edge.

In actual use, when jaws 8, 9 grip the relative cross section of tube 3, heating element 14 is supplied to heat seal the packaging material of band 5 along two sealing lines.

By virtue of convex contact surfaces 38 of pressure pads 22 and projections 18 projecting from contact surfaces 15, tube 3 of packaging material is initially gripped between contact surfaces 15, 38 at particularly high pressure to expel the pourable food product and any solid particles contained in it from the sealing area.

In other words, the packaging material of tube 3 is practically "wrung" between projections 18 of heating element 14 and the corresponding convex portions of contact surfaces 38 of pressure pads 22, to expel the pourable food product and any solid particles contained it from the sealing area.

Expulsion of the food product from the sealing area is also assisted by reducing the gripping pressure on tube 3 between longitudinal portion 24 and longitudinal portion 25 of each pressure pad 22. That is, being supported substantially rigidly inside respective seats 23 and interacting with projections 18, longitudinal portions 24 of pressure pads 22 exert much greater pressure on tube 3 than longitudinal portions 25 of pads 22, which are supported flexibly inside respective seats 23 by virtue of longitudinal gaps 31.

Consequently, there is practically no likelihood of solid particles in the food product becoming trapped between the two contacting sheets of packaging material at the sealing area, and so forming channels through the sealing area.

Clearly, changes may be made to device 1 as described and illustrated herein without, however, departing from the scope of the accompanying Claims.

In particular, each active surface 17 of heating element 14 may have a number of projections 18; and jaw 8 may house a number of heating elements or inductors to define two pairs of active surfaces, each possibly having continuous or segmented longitudinal projections.

Finally, heat-seal device 1 may advantageously be incorporated in packaging machines in which the cross sections of tube 3 of packaging material are cut before being heat sealed.

## Claims

1. A device (1) for heat sealing a tube (3) of sheet packaging material filled with a pourable food product and fed along a feed path (A), said device (1) comprising at least one first and at least one second jaw (8, 9) having sealing means (14) and pressure means (22) respectively, and movable towards each other in a direction (C) crosswise to said feed path (A) to grip said tube (3) at a relative cross section and to seal the tube along said cross section; said first jaw (8) defining at least one first contact surface (15) cooperating with said tube (3) of packaging material and having at least one projection (18) forming part of the sealing means (14); and said pressure means (22) defining at least one second contact surface (38) cooperating with said tube (3) of packaging material on the opposite side to said first contact surface (15);
said second contact surface (38) being convex, at least at said projection (18) of said first contact surface (15);
said second contact surface (38) defining a maximum-projection point (M), towards said first jaw (8);
**characterized in that** said maximum-projection point (M) is offset with respect to said projection (18) in the direction of said feed path (A).

2. A device as claimed in Claim 1, **characterized in that** said second contact surface (38) is arc-shaped.

3. A device as claimed in any one of the foregoing Claims, **characterized in that** said pressure means comprise at least one pressure pad (22) made of elastomeric material, housed in a respective seat (23) on said second jaw (9), and defined, towards said first jaw (8), by said second contact surface (38).

4. A device as claimed in Claim 3, **characterized in that** said pressure pad (22) comprises a first portion (24) supported substantially rigidly in said seat (23) and facing said projection (18); and an adjacent second portion (25) supported flexibly in said seat (23).

5. A device as claimed in Claim 4, **characterized in that** said first portion (24) acts on said projections (18) exerting much greater pressure on said tube (3) than said second portion (25).

6. A device as claimed in any of Claims from 3 or 5, **characterized in that** said first jaw (8) comprises two said first contact surfaces (15) cooperating with said tube (3) of packaging material; said sealing means comprising at least one heating element (14) carried by said first jaw (8) and defining at least one pair of active surfaces (17) defining respective portions of respective said first contact surfaces (15) and each having at least one respective said projection (18); said pressure means comprising two said pressure pads (22) defining respective said second contact surfaces (38) and facing respective said first contact surfaces (15).

## Patentansprüche

1. Vorrichtung (1) zum Heißsiegeln eines Schlauches (3) aus Folienverpackungsmaterial, das mit einem gießbaren Lebensmittelerzeugnis gefüllt ist und entlang eines Zuführweges (A) zugeführt wird, wobei die Vorrichtung (1) wenigstens eine erste und eine zweite Backe (8, 9) umfasst, die eine Siegelungsvorrichtung (14) beziehungsweise eine Druckvorrichtung (22) aufweisen und in einer Richtung (C) quer zu dem Zuführweg (A) zueinander bewegt werden können, um den Schlauch (3) an einem jeweiligen Querschnitt zu greifen und den Schlauch entlang des Querschnittes zu siegeln; wobei die erste Backe (8) wenigstens eine Kontaktfläche (15) bildet, die mit dem Schlauch (3) aus Verpackungsmaterial zusammenwirkt und wenigstens einen Vorsprung (18) aufweist, der einen Teil der Versiegelungsvorrichtung (14) ausbildet; und wobei die Druckvorrichtung (22) wenigstens eine zweite Kontaktfläche (38) bildet, die mit dem Schlauch (3) aus Verpackungsmaterial auf der gegenüberliegenden Seite der ersten Kontaktfläche (15) zusammenwirkt;
wobei die zweite Kontaktfläche (38), wenigstens an dem Vorsprung (18) der ersten Kontaktfläche (15), konvex ist;
wobei die zweite Kontaktfläche (38) einen größten Vorsprungspunkt (M) zu der ersten Backe (8) hin bildet;
**dadurch gekennzeichnet, dass** der größte Vorsprungspunkt (M) in Bezug auf den Vorsprung (18) in der Richtung des Zuführweges (A) versetzt ist.

2. Vorrichtung nach Anspruch 1, **dadurch gekennzeichnet, dass** die zweite Kontaktfläche (38) bogenförmig ist.

3. Vorrichtung nach einem der vorhergehenden Ansprüche, **dadurch gekennzeichnet, dass** die Druckvorrichtung wenigstens eine Druckleiste (22) enthält, die aus elastomerem Material besteht, die in einem jeweiligen Sitz (23) auf der zweiten Backe (9) aufgenommen wird, und die von der zweiten Kontaktfläche (38) zu der ersten Backe (8) hin gebildet wird.

4. Vorrichtung nach Anspruch 3, **dadurch gekennzeichnet, dass** die Druckleiste (22) einen ersten Abschnitt (24) umfasst, der im Wesentlichen starr in dem Sitz (23) gelagert ist und dem Vorsprung (18) zugewandt ist; sowie einen zweiten Abschnitt (25), der flexibel in dem Sitz (23) gelagert ist.

5. Vorrichtung nach Anspruch 4, **dadurch gekennzeichnet, dass** de erste Abschnitt (24) auf die Vorsprünge (18) wirkt und **dadurch** einen weitaus größeren Druck auf den Schlauch (3) als der zweite Abschnitt (25) ausübt.

6. Vorrichtung nach einem der Ansprüche 3 bis 5, **dadurch gekennzeichnet, dass** die erste Backe (8) zwei erste Kontaktflächen (15) umfasst, die mit dem Schlauch (3) aus Verpackungsmaterial zusammenwirken; wobei die Siegelungsvorrichtung wenigstens ein Heizelement (14) umfasst, das auf der ersten Backe (8) gelagert ist und wenigstens ein Paar aktiver Flächen (17) bildet, die jeweilige Abschnitte von jeweiligen ersten Kontaktflächen (15) bilden, und wobei eine jede wenigstens einen jeweiligen Vorsprung (18) aufweist; wobei die Druckvorrichtung zwei Druckleisten (22) aufweist, die jeweilige zweite Kontaktflächen (38) bilden und den ersten Kontaktflächen (15) zugewandt sind.

## Revendications

1. Dispositif (1) pour thermosceller un tube (3) de matériau d'emballage en feuille rempli d'un produit alimentaire fluide et amené le long d'une trajectoire d'introduction (A), le dit dispositif (1) comprenant au moins une première et au moins une seconde pinces (8, 9) comportant des moyens de fermeture hermétique (14) et des moyens de pression (22) respectivement, et pouvant être déplacées les unes vers les autres dans une direction (C) perpendiculaire à ladite trajectoire d'introduction (A) afin de saisir ledit tube (3) au niveau d'une coupe transversale relative et de fermer hermétiquement le tube le long de ladite coupe transversale ; ladite première pince (8) définissant au moins une première surface de contact (15) coopérant avec ledit tube (3) de matériau d'emballage et comportant au moins une saillie (18) faisant partie des moyens de fermeture hermétique (14) ; et lesdits moyens de pression (22) définissant au moins une seconde surface de contact (38) coopérant avec ledit tube (3) de matériau d'emballage sur le côté opposé à ladite première surface de contact (15) ;
ladite seconde surface de contact (38) étant convexe, au moins au niveau de ladite saillie (18) de ladite première surface de contact (15) ;
ladite seconde surface de contact (38) définissant un point de saillie maximal (M), vers ladite première pince (8) ;
**caractérisé en ce que** ledit point de saillie maximal (M) est décalé par rapport à ladite saillie (18) dans la direction de ladite trajectoire d'alimentation (A).

2. Dispositif selon la revendication 1, **caractérisé en ce que** ladite seconde surface (38) est arquée.

3. Dispositif selon l'une quelconque des revendications précédentes, **caractérisé en ce que** lesdits moyens de pression comprennent au moins un tampon de pression (22) constitué d'un matériau élastomère, logé dans un support respectif (23) sur ladite seconde pince (9) et défini, vers ladite première pince (8), par ladite seconde surface de contact (38).

4. Dispositif selon la revendication 3, **caractérisé en ce que** ledit tampon de pression (22) comprend une première partie (24) soutenue de façon sensiblement rigide dans ledit support (23) et faisant face à ladite saillie (18) ; et une seconde partie adjacente (25) soutenue de façon flexible dans ledit support (23).

5. Dispositif selon la revendication 4, **caractérisé en ce que** ladite première partie (24) agit sur lesdites saillies (18) en exerçant une pression sur ledit tube (3) bien supérieure à celle de ladite seconde partie (25).

6. Dispositif selon l'une quelconque des revendications 3 à 5, **caractérisé en ce que** ladite première pince (8) comprend deux dites premières surfaces de contact (15) coopérant avec ledit tube (3) de matériau d'emballage ; lesdits moyens de fermeture hermétique comprenant au moins un élément de chauffage (14) soutenu par ladite première pince (8) et définissant au moins une paire de surfaces actives (17) définissant des parties respectives des dites premières surfaces de contact respectives (15) et chacun comportant au moins une dite saillie respective (18) ; lesdits moyens de pression comprenant deux dits tampons de pression (22) définissant les dites secondes surfaces de contact respectives (38) et faisant face aux dites premières surfaces de contact respectives (15).
